# EUROPÄISCHE PATENTSCHRIFT

(11) **EP 0 752 927 B1**
(45) Veröffentlichungstag und Bekanntmachung des Hinweises auf die Patenterteilung: **19.11.1997**
(21) Anmeldenummer: 95908933.5
(22) Anmeldetag: 13.02.1995
(51) Int. Cl.: B23K 26/06

(54) **VORRICHTUNG ZUM ABTRAGEN VON SCHICHTEN EINER OBERFLÄCHE MITTELS LASERSTRAHLUNG**
DEVICE FOR REMOVING LAYERS FROM A SURFACE USING LASER RADIATION
DISPOSITIF PERMETTANT D'ENLEVER DES COUCHES D'UNE SURFACE PAR RAYONNEMENT LASER

(30) Priorität: 26.03.1994 DE 4410613
(43) Veröffentlichungstag der Anmeldung: 15.01.1997
(73) Patentinhaber: Urenco Deutschland GmbH, D-52409 Jülich (DE)
(72) Erfinder: WERNER, Linus, D-41462 Neuss (DE)
(74) Vertreter: Gottlob, Peter, Dipl.-Ing.
(86) Internationale Anmeldenummer: EP9500503
(87) Internationale Veröffentlichungsnummer: WO9526255

(56) Entgegenhaltungen:
- FR-A- 2 224 902
- US-A- 4 756 765

## Beschreibung

Die Erfindung betrifft ein Verfahren zum gleichmäßigen Abtragen einzelner oder mehrerer Schichten von einer beschichteten Oberfläche mit einem gepulsten Laser gemäß dem Oberbegriff von Anspruch 1.

Aus "Industrial Laser Review", August 1991, Seiten 7 bis 9, ist es bekannt, zum Abtragen von Farbschichten einer Aluminium- oder Verbundmaterialoberfläche mittels gepulster Laserstrahlung eine gerasterte Schablone zu verwenden, deren Rasterelemente jeweils dem Querschnitt eines Laserpulses entsprechen. Dabei überlappen sich benachbarte Schablonen.

Aus der US-PS 4,756,765 ist es bekannt, die beschichtete Oberfläche zeilenweise mit einer Laserpuls-Strahlung abzurastern, wobei der Querschnitt eines Laserpulses beim Auftreffen auf die Oberfläche die Form eines Quadrates haben kann.

Für einen gleichmäßigen Abtrag der einzelnen Farbschichten ist es wichtig, daß jedes Flächenelement auf der zu behandelnden Oberfläche mit derselben Anzahl von Laserpulsen beaufschlagt wird. Beim Wechseln von einer Zeile zur nächsten Zeile entstehen jedoch aufgrund von Toleranzen Randzonen zwischen zwei benachbarten Zeilen, bei denen diese Bedingung nicht erfüllt ist: Ist der Zeilenversatz zu groß, so bleibt ein Randstreifen unbeleuchtet; ist der Zeilenversatz zu klein, so entsteht ein Randstreifen, der die doppelte Anzahl von Laserpulsen erhalten hat.

Die Erfindung hat zur Aufgabe, ein Verfahren der gattungsgemäßen Art so zu verbessern, daß trotz der vorerwähnten Toleranzen bezüglich der Zeilenpositionierung des beweglichen Lasersystems an den Randzonen zwischen zwei Zeilen keine über- oder unterbelichteten Streifen auftreten.

Zur Lösung dieser Aufgabe werden die im Kennzeichen der Patentansprüche genannten Maßnahmen vorgeschlagen.

In den Randzonen einer Zeile, die von den Randbereichen des beleuchteten Ausschnitts überstrichen werden, nimmt die Zahl der Pulse pro Flächeneinheit zur Peripherie hin ab. Wird nun beim Zeilenwechsel die neue Zeilenposition so gewählt, daß das freie Ende eines Randbereichs mit der Grenze der Zentralzone der vorhergegangenen Zeile zusammentrifft, so ist es umgekehrt: die Zahl der Pulse pro Flächeneinheit nimmt von der Grenze dieser Zentralzone bis zur Peripherie der Randzone dieser vorangegangenen Zeile zu. Auf diese Weise erhält die doppelt abgerasterte Randzone zwischen den Zentralzonen der beiden Zeilen dieselbe Anzahl von Pulsen wie die Zentralzonen, wobei Toleranzen bezüglich der Zeilenpositionierung nur zu vernachlässigbaren Abweichungen führen.

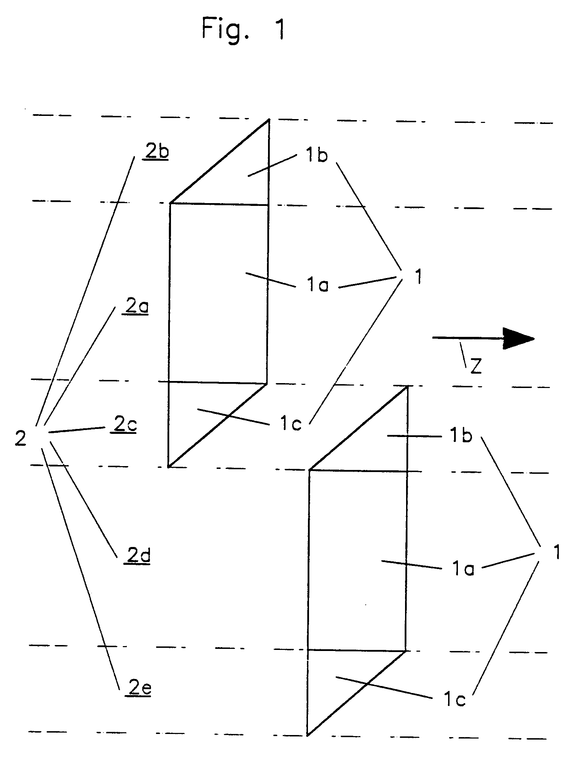

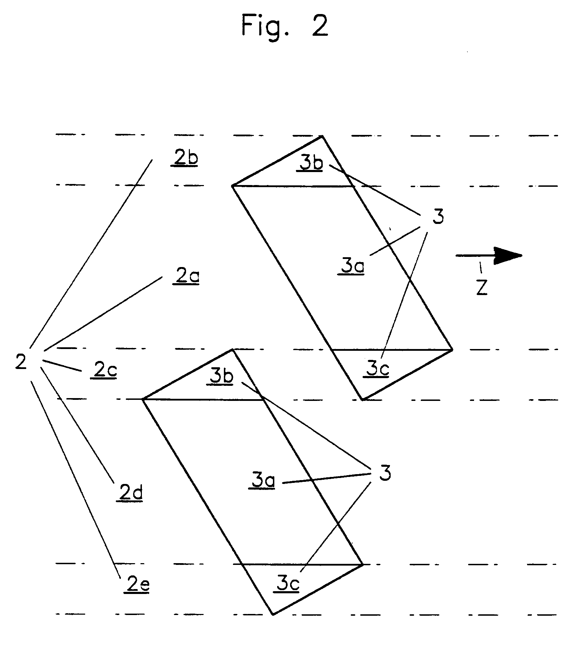

Ausführungsbeispiele der Erfindung werden im folgenden anhand der Figuren 1 und 2 erläutert.

Die Figur 1 zeigt einen mittels Strahlformung erzeugten, durch einen Laserpuls beleuchteten Ausschnitt 1 der zu behandelnden Oberfläche 2.

Dieser Ausschnitt wird mittels einer Ablenkeinrichtung des Lasersystems (nicht dargestellt) in Richtung des Zeilenvorschubs Z abgetastet. Dabei soll die Zahl der Laserpulse pro Flächeneinheit für jede Zeile gleich sein.

Der Ausschnitt 1 ist in einen Zentralbereich 1a und zwei einander gegenüberliegende Randbereiche 1b und 1c unterteilt. Der Zentralbereich 1a hat die Gestalt eines Rechtecks, dessen Längsseiten senkrecht zur Richtung des Zeilenvorschubs Z verlaufen. Die sich an den Zentralbereich 1a quer zum Zeilenvorschub bzw. zur Abtastrichtung anschließenden Randbereiche 1b und 1c werden von je einem rechtwinkligen Dreieck gebildet, deren äußere Spitzen an der Peripherie der Randbereiche 1b, 1c liegen. Diese beiden Dreiecke ergänzen sich beim Zeilenwechsel zu einer Gesamtfläche, deren Breite der Breite des Zentralbereichs 1a, in Richtung des Zeilenvorschubs gemessen, entspricht.

Auf diese Weise wird erreicht, daß beim quasi-kontinuierlichen Abrastern der Oberfläche mit Laserpulsen in Richtung des Zeilenvorschubs Z entlang der beiden Randzonen 2b und 2c die Zahl der Laserpulse pro Flächeneinheit von der Zentralzone 2a zur Peripherie der Randzonen 2b, 2c hin linear abnimmt.

Beim Zeilenwechsel wird der Zeilenabstand so gewählt, daß sich die beiden Randbereiche 1b und 1c möglichst vollständig überlappen. Dadurch wird die Randzone 2c ein zweites Mal beleuchtet, nun aber mit umgekehrtem Intensitätsverlauf bezüglich der Laserpulse pro Flächeneinheit.

Damit erhalten die Randzonen 2b, 2c, 2e auch bei etwaigen Toleranzen des Zeilenabstandes praktisch dieselbe konstante Anzahl von Laserpulsen pro Flächeneinheit wie die Zentralzonen 2a, 2d jeder Zeile der zu beleuchteten Oberfläche 2, womit ein gleichmäßiger Antrag einzelner oder mehrerer Farbschichten von der beschichteten Oberfläche gewährleistet ist.

Figur 2 zeigt eine Variante zu dem Beispiel gemäß Figur 1. In diesem Fall hat der Ausschnitt 3 die Gestalt eines schräg zur Richtung des Zeilenvorschubs Z gestellten Rechtecks, womit sich in Bezug auf die Abtastrichtung für den Zentralbereich ein Parallelogramm 3a und für die Randbereiche 3b, 3c je ein rechtwinkliges Dreieck ergibt.

## Patentansprüche

1. Verfahren zum gleichmäßigen Abtragen einzelner oder mehrerer Schichten von einer beschichteten Oberfläche (2) mit einem gepulsten Laser, dessen Laserpuls-Strahlung mittels eines Strahl-Formers jeweils einen Ausschnitt (1) vorgegebenen Querschnitts der Oberfläche (2) beleuchtet, wobei mit der Laserpuls-Strahlung die Oberfläche (2) zeilenweise so abgetastet wird, daß jede Flächeneinheit der Oberfläche (2), in Zeilenrichtung gesehen, die gleiche Anzahl von Laserpulsen erhält,
dadurch gekennzeichnet daß beim Abtasten
a) der beleuchtete Ausschnitt (1) der Oberfläche (2) in einen Zentralbereich (1a) und zwei Randbereiche (1b, 1c) unterteilt wird in der Weise, daß
b) der Zentralbereich (1a) von zwei parallelen, die Abtastrichtung (Z) schneidenden Kurven begrenzt wird, und
c) die sich an den Zentralbereich (1a) quer zur Abtastrichtung (Z) anschließenden Randbereiche (1b, 1c) von spitz zulaufenden Flächen gebildet werden, wobei
d) beim Zeilenwechsel der Zeilenabstand so gewählt wird, daß die Fläche des einen Randbereiches (1b) und die Fläche des gegenüberliegenden anderen Randbereiches (1c) sich zu einer Gesamtfläche überlappen, deren Breite der Breite des Zentralbereichs (1a), in Abtastrichtung (Z) gemessen, entspricht.

2. Verfahren nach Anspruch 1, dadurch gekennzeichnet, daß beim Abtasten in Richtung des Zeilenvorschubs (Abtastrichtung Z) der Zentralbereich (1a bzw. 3a) des beleuchteten Ausschnitts (1 bzw. 3) die Form eines Rechtecks oder eines Parallelogramms und die beiden Randbereiche (1b, 1c bzw. 3b, 3c) jeweils die Form eines Dreiecks aufweisen.

## Claims

1. Method of uniformly removing individual or several layers from a coated surface (2) using a pulsed laser, the laser pulse radiation of said laser illuminating a portion (1) of a prescribed cross-section of the surface (2) by means of a beam former, the surface (2) being so scanned in lines with the laser pulse radiation that each unit of area of the surface (2), when viewed with respect to the line direction, receives the same number of laser pulses,
characterised in that, during the scanning process,
a) the illuminated portion (1) of the surface (2) is divided into a central zone (1a) and two edge zones (1b, 1c) in such a manner that
b) the central zone (1a) is defined by two parallel curves intersecting the scanning direction (Z), and
c) the edge zones (1b, 1c), which communicate with the central zone (1a) transversely relative to the scanning direction (Z), are formed by areas which taper to a point, wherein
d) during the line change, the line spacing is so selected that the area of one edge zone (1b) and the area of the other oppositely situated edge zone (1c) overlap each other to form a total area, the wide of which corresponds to the width of the central zone (1a), when measured with respect to the scanning direction (Z).

2. Method according to claim 1, characterised in that, during the scanning process in the direction of the line feed (scanning direction Z), the central zone (1a or 3a) of the illuminated portion (1 or 3) has the form of a rectangle or a parallelogram, and the two edge zones (1b, 1c or 3b, 3c) each have the form of a triangle.

## Revendications

1. Procédé pour enlever régulièrement une ou plusieurs couches d'une surface revêtue (2), à l'aide d'un laser impulsionnel dont le faisceau laser impulsionnel éclaire, par un formeur de faisceau, chaque fois un extrait (1) de section prédéterminée de la surface (2), le rayonnement laser impulsionnel balayant la surface (2) ligne par ligne, chaque surface élémentaire de la surface (2), mesurée dans la direction des lignes, recevant le même nombre d'impulsions laser,
caractérisé en ce que
au balayage
a) l'extrait exposé (1) de la surface (2) est subdivisé en une plage centrale (1a) et deux plages marginales (1b, 1c),
b) la plage centrale (1a) est bordée par deux courbes parallèles coupant la direction de balayage (Z),
c) les plages marginales (1b, 1c) adjacentes à la plage centrale (1a) transversalement à la direction de balayage (Z), sont formées par des surfaces qui se terminent par une pointe,
d) en cas de changement de ligne, on choisit l'intervalle entre les lignes pour que la surface de l'une des plages marginales (1b) et la surface de l'autre plage marginale (1c) opposée, se chevauchent pour former une surface totale dont la largeur correspond à la largeur de la plage centrale (1a) mesurée dans la direction de balayage (Z).

2. Procédé selon la revendication 1,
caractérisé en ce que
pour un balayage dans la direction de l'avance de ligne (direction de balayage Z), la plage centrale (1a, 3a) de l'extrait éclairé (1, 3) a la forme d'un rectangle ou d'un parallélogramme et les deux plages marginales (1b, 1c ou 3b, 3c) ont chaque fois la forme d'un triangle.
